Europäisches Patentamt

European Patent Office

Office européen des brevets

(11) Veröffentlichungsnummer : **0 065 081**
**B1**

(12) **EUROPÄISCHE PATENTSCHRIFT**

(45) Veröffentlichungstag der Patentschrift :
07.05.86

(21) Anmeldenummer : **82101730.8**

(22) Anmeldetag : **05.03.82**

(51) Int. Cl.⁴ : **A 01 B 59/043**

(54) Geräteanbauvorrichtung für Ackerschlepper.

(30) Priorität : **15.05.81 DE 3119315**

(43) Veröffentlichungstag der Anmeldung :
**24.11.82 Patentblatt 82/47**

(45) Bekanntmachung des Hinweises auf die Patenterteilung : **07.05.86 Patentblatt 86/19**

(84) Benannte Vertragsstaaten :
**AT DE FR GB IT**

(56) Entgegenhaltungen :
DE-B- 1 096 102
FR-A- 1 338 828
US-A- 2 541 964
US-A- 2 971 591
US-A- 2 985 033
US-A- 3 056 458
US-A- 3 110 509

(73) Patentinhaber : **Klöckner-Humboldt-Deutz Aktiengesellschaft**
**Deutz-Mülheimer-Strasse 111 Postfach 80 05 09**
**D-5000 Köln 80 (DE)**

(72) Erfinder : **Adams, Heribert, Dipl.-Landw.**
**Eigen 34**
**D-5064 Rösrath (DE)**
Erfinder : **Schömann, Friedhelm**
**Platanenallee 2**
**D-5014 Kerpen (DE)**

## Beschreibung

Die Erfindung bezieht ich auf eine Geräteanbauvorrichtung für Ackerschlepper mit einem Kraftheber, der zwei an den Enden einer quer gelagerten Hubwelle drehfest sitzende Hubarme gleichsinnig auf- und abbewegt, wobei zum Anschließen eines Arbeitsgerätes zwei untere Lenker am Schlepper etwa in Achshöhe mit Abstand zueinander schwenkbar angreifen, die durch je eine Hubstange und ein Kreuzgelenk mit den freien Enden der Hubarme gelenkig verbunden sind, wobei zur Einstellung eines Freiganges im Kraftfluß zwischen den Hubarmen und den unteren Lenkern ein Teil ein Langloch und ein daran anschließendes Teil einen in das Langloch verschiebbar eingreifenden und durch ein U-förmiges Sperrglied festlegbaren Schwenkzapfen aufweist, das mit seinen beiden Schenkeln drehbar auf dem Schwenkzapfen sitzt.

Eine Geräteanbauvorrichtung dieser Art ist durch die DE-AS-10 96 102 bekanntgeworden, wobei das Langloch zur Einstellung eines Freiganges in einem gabelförmigen Verbindungteil zwischen der Hubstange und dem Unterlenker der Geräteanbauvorrichtung angeordnet ist. Das U-förmige Sperrglied sitzt drehbar auf dem im Unterlenker gelagerten Schwenkzapfen. Zum Verriegeln bzw. Lösen des U-förmigen Sperrgliedes dient hierbei ein Steckbolzen, der gegen Herausfallen gesichert ist. Das Betätigen eines solchen Steckbolzens ist jedoch relativ umständlich, zumal dies im vorliegenden Fall an einer ungünstigen Stelle am unteren Ende der Hubstange erfolgen muß. Die Verschiebesicherung des Steckbolzens kann durch Schmutz und Korrosion festsitzen, wodurch die Betätigung zusätzlich erschwert wird. Außerdem ist der Steckbolzen als Losteil ausgebildet und kann daher leicht verlorengehen. Ferner ist das bekannte Sperrglied aufgrund seiner Bauweise relativ aufwendig.

Der Erfindung liegt die Aufgabe zugrunde, unter Vermeidung der angeführten Nachteile eine Geräteanbauvorrichtung der eingangs umrissenen Gattung zu schaffen, die sowohl gut zugänglich ist als sich auch unter Verwendung einfachster Mittel leicht in die gewünschte Lage verstellen läßt und wobei ferner das Stellmittel unverlierbar mit einem Bauteil der Geräteanbauvorrichtung verbunden ist.

Die Aufgabe wird erfindungsgemäß dadurch gelöst, daß das Langloch in einem Teil des Kreuzgelenks angeordnet ist, daß das Sperrglied an dem in das Langloch eingreifenden Zapfen aus einer Freigangstellung in eine Sperrstellung bzw. umgekehrt verschwenkbar und/oder verschiebbar gehalten ist und daß an dem das Langloch aufweisenden Teil beiderseits Schultern als Abstützung für die den Bohrungen für den Schwenkzapfen abgewandten Enden der beiden Schenkel des Sperrgliedes in Sperrstellung angeordnet sind.

Durch diese Maßnahmen erhält man für eine Geräteanbauvorrichtung genannter Art ein gut zugängliches und leicht zu betätigendes Sperrglied zum Ein- bzw. Ausschalten des Pendelausgleichs in den Hubstangen, das zudem unverlierbar ist.

Gemäß einer konstruktiv zweckdienlichen Lösung der Erfindung weist der im Kreuzgelenk als Schwenkzapfen dienende Schenkel des U-förmigen Bügels eine leicht lösbare axiale Verschiebesicherung auf, wobei der andere Schenkel in seiner Länge so bemessen ist, daß dieser unter Beibehaltung der gelenkigen Verbindung zwischen dem Gelenkkopf und der Hubstange in bzw. aus der Verriegelungsstellung verschiebbar bzw. verschwenkbar ist.

Bei einer anderen vorteilhaften Ausführungsform der Erfindung greift der am Hubarm sitzende Schwenkzapfen des Kreuzgelenks in ein Langloch im Gelenkkopf ein, wobei auf dem Schwenkzapfen drehbar ein Sperrglied gelagert ist, das bei Freigangstellung Verschiebungen des Schwenkzapfens im Langloch ermöglicht und bei Sperrstellung den Schwenkzapfen durch Abstützung an vorspringenden Teilen des Gelenkkopfes fixiert.

Bei der zuletzt beschriebenen Ausführungsform der Erfindung kann es zweckdienlich sein, wenn das Sperrglied als U-förmiges Teil ausgebildet ist, dessen beide mit Bohrungen versehene Schenkel beiderseits des Gelenkkopfes drehbar auf dem Schwenkzapfen sitzen und wobei sich die beiden durch einen Steg verbundenen Schenkel in Sperrstellung mit ihren den Bohrungen für den Schwenkzapfen abgewandten Enden an Schultern des Gelenkkopfes abstützen.

Die Erfindung wird im folgenden anhand eines Ausführungsbeispiel unter Bezugnahme auf die Zeichnung näher beschrieben. Es zeigt :

Figur 1 in Seitenansicht das Kreuzgelenk einer Geräteanbauvorrichtung mit einem Sperrglied gemäß der Erfindung,

Figur 2 eine Rückansicht des Kreuzgelenks gemäß Fig. 1.

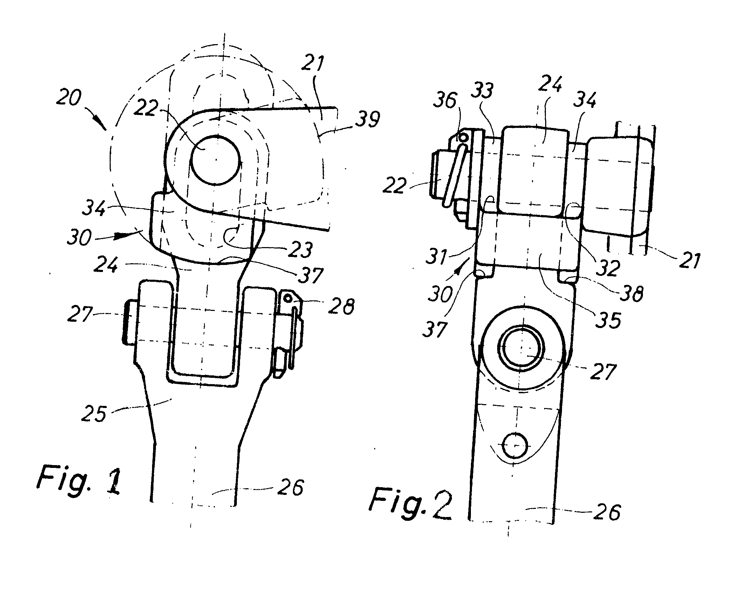

Bei einer Geräteanbauvorrichtung greift gemäß der Fig. 1 und 2 am Kreuzgelenk 20 ein mit dem Hubarm 21 eines Krafthebers verbundener Schwenkzapfen 22 in ein Langloch 23 ein, das im oberen Bereich eines Gelenkkopfes 24 angeordnet ist. Der untere Teil des Gelenkkopfes 24 ragt in ein gabelförmiges Teil 25 einer Hubstange 26 hinein und ist mit diesem durch einen Schwenkzapfen 27 gelenkig verbunden. Durch ein am Ende des Schwenkzapfens 27 sitzendes Sicherungselement 28 ist dieser gegen Herausfallen fixiert. Auf dem oberen Schwenkzapfen 22 sitzt drehbar ein U-förmiges Sperrglied 30, das zwei beiderseits am Gelenkkopf 24 anliegende und mit je einer Bohrung 31 bzw. 32 auf dem Schwenkzapfen 22 drehbar sitzende Schenkel 33 bzw. 34 aufweist. Die beiden Schenkel 33, 34 sind flach ausgebildet und durch einen Steg 35 miteinander verbunden. Ein Sicherungselement 36 am Ende des Schwenkzapfens 22 verhütet das axiale Verschieben des Gelenkkopfes 24 sowie des Sperrgliedes 30 auf dem Schwenkzapfen 22. Bei der in den Fig. 3 und 4 gezeigten Stellungen des Sperrglieds 30 sind hin- und hergehende Bewegungen des Gelenkkopfes 24 auf dem Schwenkzapfen 22 dadurch gesperrt, daß sich das Sperrglied 30 mit seinen beiden Schenkeln 33, 34 auf seitlichen Schultern 37 bzw. 38 des Gelenkkopfes 24 abstützt. In dieser Endlage des Sperrgliedes 30 sind somit nur Drehbewegungen des Gelenkkopfes 24 auf dem Schwenkzapfen 22 möglich. Wird dagegen das Sperrglied 30 durch Verschwenken aus der gezeigten Endlage in die mit 39 bezeichnete strich-punktiert angedeutete Endlage gebracht, dann ist der Freigang eingestellt. Hierbei kann sich der Gelenkkopf 24 bzw. die daran angreifende Hubstange 26 entsprechend der Länge des Langlochs 23 gegenüber dem Hubarm 21 frei auf- und abbewegen, so daß bei Einstellung beider Hubstangen auf Freigang ein an die Geräteanbauvorrichtung angeschlossenes Arbeitsgerät entsprechende Pendelbewegungen ausführen kann.

## Patentanspruch

Geräteanbauvorrichtung für Ackerschlepper mit einem Kraftheber, der zwei an den Enden einer quer gelagerten Hubwelle drehfest sitzende Hubarme (21) gleichsinnig auf- und abbewegt, wobei zum Anschließen eines Arbeitsgerätes zwei untere Lenker am Schlepper etwa in Achshöhe mit Abstand zueinander schwenkbar angreifen, die durch je eine Hubstange (26) und ein Kreuzgelenk (20) mit den freien Enden der Hubarme (21) gelenkig verbunden sind, wobei zur Einstellung eines Freiganges im Kraftfluß zwischen den Hubarmen (21) und den unteren Lenkern ein Teil (24) ein Langloch (23) und ein daran anschließendes Teil (25) einen in das Langloch (23) verschiebbar eingreifenden und durch ein U-förmiges Sperrglied (30) festlegbaren Schwenkzapfen (22) aufweist, das mit seinen beiden Schenkeln (33, 34) drehbar auf dem Schwenkzapfen (22) sitzt, dadurch gekennzeichnet, daß das Langloch (23) in einem Teil (24) des Kreuzgelenks (20) angeordnet ist, daß das Sperrglied (30) an dem in das Langloch (23) eingreifenden Zapfen (22) aus einer Freigangstellung in eine Sperrstellung bzw. umgekehrt verschwenkbar und/oder verschiebbar gehaltert ist und daß an dem das Langloch (23) aufweisenden Teil (24) beiderseits Schultern (37, 38) als Abstützung für die den Bohrungen (31, 32) für den Schwenkzapfen (22) abgewandten Enden der beiden Schenkel (33, 34) des Sperrgliedes (30) in Sperrstellung angeordnet sind.

## Claim

An implement-attachment device for agricultural tractors with a power lift serving to move two lift arms (21), which are secured fast in rotation on the ends of a transversely-mounted lifting shaft, up and down in the same direction, wherein, for the attachment of a working implement, two spaced-apart lower links engage pivotally on the tractor approximately at axle level, which links are articulatedly connected each by a lift rod (26) and a universal joint (20) with the free ends of the lift arms (21), while, for the setting of a free motion in the force flux between the lift arms (21) and the lower links, a part (24) comprises a slot (23) and an adjoining part (25) comprises a pivot journal (22) engaging displaceably in the slot (23) and securable by a U-shaped locking member (30) which is seated with its two legs (33, 34) rotatable on the pivot journal (22), characterised in that the slot (23) is arranged in a part (24) of the universal joint (20) ; that the locking member (30) is retained on the journal (22), which engages in the slot (23), pivotably and/or displaceably out of a free motion position into a locking position and *vice versa*, and that shoulders (37, 38) are arranged on both sides on the part (24) having the slot (23) as support for the ends of the two legs (33, 34) of the locking member (30) which are remote from the bores (31, 32) for the pivot journal (22) in the locking position.

## Revendication

Dispositif d'accouplement d'outil pour un tracteur agricole comportant un moyen de levage, qui soulève et abaisse dans le même sens, deux bras de levage (21) solidaires en rotation des extrémités d'un axe de levage transversal, et pour accoupler un outil, deux bras inférieurs du tracteur attaquent sensiblement à hauteur d'axe en pouvant basculer l'un par rapport à l'autre d'une certaine distance, ces deux bras étant reliés de façon articulée respectivement par une tige (26) et un joint universel à cardan (20) aux extrémités libres des bras de levage (21), et pour régler une marche à vide dans le chemin des forces entre les bras de levage (21) et les bras inférieurs, une pièce (24) comporte un trou oblong (23) et une pièce (25) reliée à la précédente comporte un goujon basculant (22) susceptible de se loger de façon coulissante dans le trou oblong (23) et d'y être bloqué par un organe de verrouillage (30) en forme de U, pièce dont les deux branches (33, 34) sont à rotation sur le goujon basculant (22), caractérisé en ce que le trou oblong (23) est logé dans une partie (24) du joint universel de cardan (20), en ce que l'organe de verrouillage (30) peut être basculé et/ou maintenu coulissant sur le goujon (22) venant dans le trou oblong (23) entre une position de libération et une position de verrouillage ou inversement, et en ce qu'entre la partie (24) qui comporte le trou oblong (23), il y a de part et d'autre des épaulements (37, 38) comme appuis pour les extrémités des deux branches (33, 34) de l'organe de verrouillage (30), extrémités opposées aux perçages (31, 32) du goujon de basculement (22), en position de verrouillage.

Fig. 1

Fig. 2